# FASCICULE DE BREVET EUROPEEN

(11) **EP 3 289 522 B1**
(45) Date de publication et mention de la délivrance du brevet: **24.07.2019**
(21) Numéro de dépôt: 16726128.8
(22) Date de dépôt: 27.04.2016
(51) Int. Cl.: G06K 9/00

(54) **CAPTEUR PYROELECTRIQUE POUR LA DETECTION D'EMPREINTES**
PYROELEKTRISCHER SENSOR ZUM NACHWEIS VON HAUTABDRÜCKEN
PYROELECTRIC SENSOR FOR THE DETECTION OF SKIN PRINTS

(30) Priorité: 30.04.2015 FR 1553923
(43) Date de publication de la demande: 07.03.2018
(73) Titulaire: Commissariat à l'énergie atomique et aux énergies alternatives, 75015 Paris (FR); Idemia Identity & Security France, 92400 Courbevoie (FR)
(72) Inventeur: MAINGUET, Jean-François, 38100 Grenoble (FR); FOURRE, Joel Yann, 78160 Marly-le-roi (FR); SEGURA PUCHADES, Josep, 38600 Fontaine (FR)
(74) Mandataire: Cabinet Beaumont
(86) Numéro de dépôt international: PCT/FR2016/050993
(87) Numéro de publication internationale: WO 2016/174354

(56) Documents cités:
- EP-A1- 2 385 486
- WO-A1-2015/008902
- US-A1- 2010 084 542

## Description

La présente demande de brevet revendique la priorité de la demande de brevet français FR15/53923 qui sera considérée comme faisant partie intégrante de la présente description.

### Domaine

La présente demande concerne les capteurs d'empreintes digitales ou palmaires, et, plus généralement, les capteurs d'empreintes de portions de peau. Elle vise plus particulièrement le domaine des capteurs pyroélectriques pour la détection d'empreintes de portions de peau.

### Exposé de l'art antérieur

Divers types de capteurs ont été proposés pour réaliser une acquisition électronique d'une empreinte d'une portion de peau, c'est-à-dire pour fournir une image du motif formé par les crêtes et vallées (ou creux) de la peau. On a notamment proposé des capteurs optiques, des capteurs capacitifs, des capteurs pyroélectriques, des capteurs à ultrasons, et des capteurs à champ électrique.

On s'intéresse ici plus particulièrement aux capteurs d'empreintes pyroélectriques, c'est-à-dire comportant une pluralité de cellules élémentaires d'acquisition (ou pixels), chaque cellule comportant un élément de conversion pyroélectrique comportant deux électrodes séparées par une couche d'un matériau pyroélectrique. EP2385486 divulgue de tels capteurs.

Il existe un besoin d'améliorer au moins en partie certains aspects des capteurs pyroélectriques connus.

### Résumé

Pour cela, un mode de réalisation prévoit un capteur d'empreintes comportant une pluralité de cellules élémentaires d'acquisition disposées dans et/ou sur un substrat, chaque cellule comportant : un élément de conversion pyroélectrique comportant des première et deuxième électrodes séparées par une couche d'un matériau pyroélectrique, la première électrode étant connectée à un noeud d'application d'un potentiel de référence du capteur, et la deuxième électrode étant connectée à un noeud de lecture de la cellule ; et une troisième électrode connectée au noeud de lecture et revêtue par une couche diélectrique, la troisième électrode étant destinée à former une capacité avec la peau d'un utilisateur.

Selon un mode de réalisation, dans chaque cellule, la troisième électrode est disposée de façon que seule la couche diélectrique sépare la troisième électrode d'une surface du capteur destinée à être mise en contact avec la peau d'un utilisateur.

Selon un mode de réalisation, dans chaque cellule, la troisième électrode est disposée du côté de la couche pyroélectrique opposé au substrat.

Selon un mode de réalisation, dans chaque cellule, la troisième électrode est connectée au noeud de lecture par l'intermédiaire d'un via conducteur traversant la couche pyroélectrique.

Selon un mode de réalisation, la couche diélectrique a une épaisseur inférieure à 50 µm et de préférence inférieure à 2 µm.

Selon un mode de réalisation, les deuxième et troisième électrodes sont confondues.

Selon un mode de réalisation, dans chaque cellule, la première électrode est connectée à un réseau de pistes conductrices disposé du côté de la couche pyroélectrique opposé au substrat par l'intermédiaire d'un via conducteur traversant la couche pyroélectrique.

Selon un mode de réalisation, chaque cellule comprend en outre un transistor de réinitialisation reliant le noeud de lecture à un noeud d'application d'un potentiel de réinitialisation.

Selon un mode de réalisation, dans chaque cellule, le noeud de lecture est relié à une piste de sortie de la cellule par l'intermédiaire d'un transistor monté en source suiveuse et d'un transistor de lecture.

Selon un mode de réalisation, le capteur comprend en outre une source de chaleur commandable.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique illustrant un exemple d'un capteur d'empreintes pyroélectrique ;
la figure 2 est un schéma électrique illustrant un exemple d'un mode de réalisation d'un capteur d'empreintes pyroélectrique ;
la figure 3 est une vue en coupe illustrant un exemple de réalisation d'un capteur d'empreintes pyroélectrique du type décrit en relation avec la figure 1 ;
la figure 4 est une vue en coupe illustrant un exemple de réalisation d'un capteur d'empreintes pyroélectrique du type décrit en relation avec la figure 2 ; et
la figure 5 est une vue en coupe illustrant un autre exemple de réalisation plus détaillé d'un capteur d'empreintes pyroélectrique du type décrit en relation avec la figure 2.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, les circuits périphériques de commande des cellules élémentaires des capteurs d'empreintes décrits n'ont pas été détaillés, la réalisation de tels circuits étant à la portée de l'homme de l'art à la lecture de la présente description. Par ailleurs, lorsque des architectures de cellules élémentaires, de matrices de cellules élémentaires ou de capteurs d'empreintes sont décrites, on utilise le terme "connecté" pour désigner une liaison électrique directe, sans composant électronique intermédiaire, par exemple au moyen d'une ou plusieurs pistes conductrices et/ou d'un ou plusieurs vias conducteurs, et le terme "couplé" ou le terme "relié", pour désigner une liaison électrique directe (signifiant alors connecté) ou via un ou plusieurs composants intermédiaires, par exemple via un transistor. En outre, dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures. Sauf précision contraire, les expressions "approximativement", "sensiblement", et "de l'ordre de" signifient à 10 % près, de préférence à 5 % près.

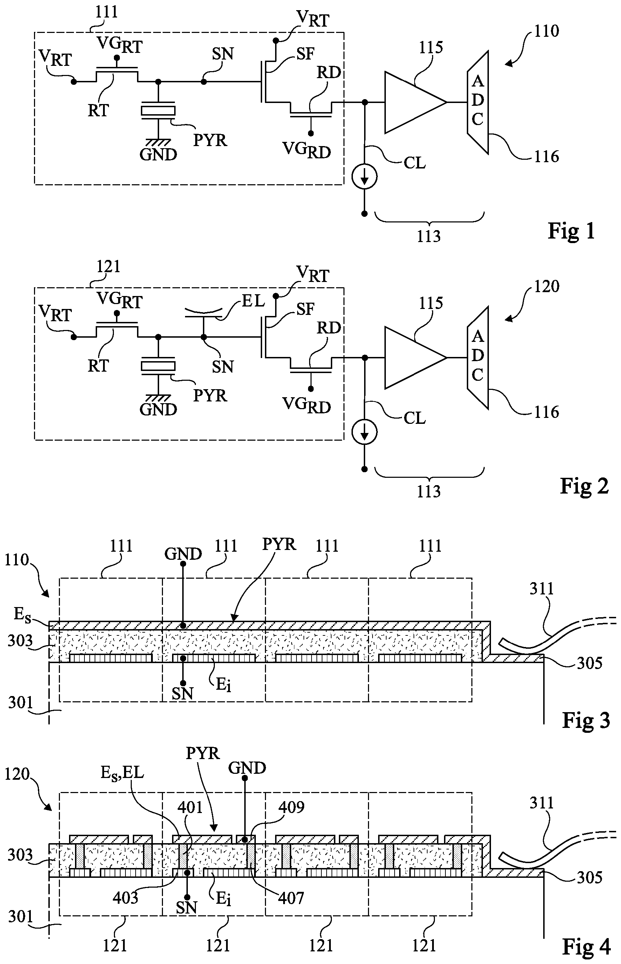

La figure 1 est un schéma électrique illustrant un exemple d'un capteur d'empreintes pyroélectrique 110. Le capteur 110 comprend une pluralité de cellules élémentaires d'acquisition 111 identiques ou similaires. Les cellules 111 sont par exemple réalisées en technologie TFT (de l'anglais "Thin Film Transistor" - transistor en couche mince) sur un substrat de support diélectrique, ou dans et sur un substrat semiconducteur monocristallin, par exemple un substrat silicium. On appellera ci-après par convention face supérieure du substrat la face du substrat du côté de laquelle sont disposées les cellules élémentaires d'acquisition 111 du capteur. Par souci de simplification, une seule cellule 111 a été représentée sur la figure 1.

Chaque cellule 111 comprend un élément de conversion pyroélectrique PYR comportant deux couches conductrices ou électrodes, par exemple métalliques, séparées par une couche d'un matériau pyroélectrique, par exemple du nitrure d'aluminium (AlN), de l'oxyde de zinc (ZnO), un polymère tel que le polyfluorure de vinylidène (PVDF) ou l'un de ses copolymères, par exemple le PVDF-TrFE (trifluoroéthylène) dont le coefficient pyroélectrique est de l'ordre de 30 µC/m²/K, un matériau céramique de type PZT (titanozirconate de plomb), dont le coefficient pyroélectrique est de l'ordre de 350 µC/m²/K, ou un matériau cristallin de type TGS (Triglycine sulfate) ou LiTaO₃. Une première électrode de l'élément de conversion pyroélectrique PYR est connectée à un noeud capacitif SN de lecture de la cellule, la deuxième électrode de l'élément PYR étant connectée à un noeud d'application d'un potentiel de référence GND, par exemple la masse.

En pratique, la capacité du noeud SN comprend la capacité de l'élément de conversion pyroélectrique PYR, à laquelle s'additionnent les capacités parasites d'un ou plusieurs transistors de la cellule connectés au noeud SN. Dans l'exemple représenté, chaque cellule 111 comprend un transistor de réinitialisation RT reliant son noeud de lecture SN à un noeud d'application d'un potentiel de réinitialisation V_{RT}, par exemple un potentiel positif par rapport au potentiel du noeud GND. Chaque cellule 111 comprend en outre un transistor SF monté en source suiveuse, dont la grille est connectée au noeud SN, et un transistor de lecture RD reliant la source du transistor SF à une piste de sortie CL de la cellule. Le drain du transistor SF est relié à un noeud d'application d'un potentiel de référence, par exemple le potentiel V_{RT} ou un autre potentiel supérieur au potentiel GND. La grille de commande du transistor RT est connectée à un noeud VG_{RT} d'application d'un potentiel de commande de ce transistor, et la grille du transistor RD est connectée à un noeud VG_{RD} d'application d'un potentiel de commande de ce transistor.

La piste de sortie CL de la cellule 111 est connectée à un étage de sortie 113 du capteur. Dans cet exemple, l'étage de sortie 113 comprend un amplificateur 115 dont une entrée est reliée à la piste CL et dont la sortie est reliée à un convertisseur analogique-numérique 116 (ADC). L'amplificateur 115 est optionnel, et peut notamment être omis si le niveau de potentiel de la piste CL est compatible avec l'entrée du convertisseur analogique-numérique 116.

Le capteur 110 comprend en outre une source de chaleur, non représentée. A titre d'exemple la source de chaleur peut comprendre un réseau de résistances chauffantes régulièrement réparties sur la surface du capteur. A titre d'exemple, la source de chaleur comprend une résistance par cellule élémentaire, cette résistance étant disposée au voisinage de l'élément pyroélectrique de la cellule. Les résistances de la source de chaleur sont par exemple disposées du même côté du substrat que les cellules 111, c'est-à-dire du côté de la face supérieure du substrat. Plus généralement, toute source de chaleur adaptée à chauffer les éléments de conversion pyroélectrique PYR du capteur peut être utilisée. A titre d'exemple, la source de chaleur peut être une source par chauffage optique. Si le substrat est transparent, la source peut alors être disposée du côté du substrat opposé aux cellules 111. La source de chaleur peut par exemple comprendre des diodes électroluminescentes, un laser, un flash au Xénon, etc. Le rayonnement émis par la source est absorbé par les électrodes et/ou la couche pyroélectrique, produisant ainsi de la chaleur. Un avantage d'un chauffage de ce type est que la source de chaleur peut être relativement éloignée des cellules d'acquisition 111, ce qui permet de réduire les couplages électromagnétiques. En outre, il est possible, en choisissant une longueur d'onde adaptée, de chauffer directement le matériau pyroélectrique dans son volume.

Le fonctionnement du capteur 110 est le suivant. L'utilisateur ayant placé une portion de peau (par exemple un doigt) sur ou au-dessus de la surface supérieure du capteur (côté cellules 111), la source de chaleur du capteur est mise en marche, et chauffe les éléments de conversion pyroélectrique PYR qui génèrent en conséquence des charges électriques sur les noeuds de lecture SN des cellules 111 correspondantes. La quantité de chaleur reçue par chaque élément de conversion pyroélectrique PYR lorsque la source de chaleur est allumée est plus importante lorsque la cellule correspondante est surmontée par une vallée de la peau, que lorsqu'elle est surmontée par une crête. En effet, lorsque la cellule est surmontée par une crête, la peau (qui est un relativement bon conducteur thermique) absorbe une part plus importante de la chaleur émise par la source que lorsque la cellule est surmontée par une vallée. Ainsi, lorsqu'une cellule est surmontée par une vallée de la peau, la quantité de charges électriques générées sur son noeud de lecture SN est plus importante que lorsque la cellule est surmontée par une crête.

Lors d'une phase d'acquisition d'un point d'image d'une empreinte par une cellule 111, le noeud de lecture SN de la cellule est d'abord réinitialisé par l'intermédiaire du transistor RT de la cellule. Le transistor RT est ensuite bloqué, et, pendant une période d'intégration, des charges générées par l'élément de conversion pyroélectrique PYR s'accumulent sur le noeud de lecture SN de la cellule, ce qui fait varier son potentiel. A la fin de l'intégration, le potentiel du noeud de lecture SN est reporté sur la piste de sortie CL de la cellule par l'intermédiaire des transistors SF et RD. Pour cela, le transistor RD de la cellule est rendu passant. Le potentiel de la piste de sortie CL est alors lu par l'étage de sortie 113 associé à la piste de sortie CL. Le potentiel du noeud de lecture peut aussi être lu après la réinitialisation et avant le début de l'intégration, la valeur de sortie du pixel étant alors la différence entre la valeur de référence lue avant l'intégration et la valeur lue après l'intégration.

De préférence, lors d'une acquisition, la source de chaleur est commandée pour produire une impulsion de chaleur, et les cellules sont lues un certain temps après le début de l'impulsion, et/ou peu de temps après la fin de l'impulsion, de façon à s'affranchir des phénomènes de thermalisation entraînant, avec le temps, l'uniformisation des niveaux de charge accumulés sur les noeuds de lecture SN des différentes cellules.

A titre d'exemple, plusieurs cellules élémentaires 111 peuvent être connectées à une même piste de sortie CL et partager un même étage de sortie 113 du capteur. Les cellules 111 sont par exemple disposées en matrice selon des lignes et des colonnes, les cellules d'une même colonne étant connectées à une même piste de sortie CL et à un même étage de sortie 113, et les cellules de colonnes distinctes étant connectées à des pistes de sortie CL distinctes et à des étages de sortie 113 distincts. A titre d'exemple, les cellules 111 sont commandables simultanément ligne par ligne, c'est-à-dire que les cellules 111 d'une même ligne ont leurs noeuds VG_{RT}, respectivement VG_{RD}, connectés à une même piste de commande et les cellules 111 de lignes distinctes ont leurs noeuds VG_{RT}, respectivement VG_{RD}, connectés à des pistes de commande distinctes. De préférence, la source de chaleur est alors commandable pour chauffer les cellules 111 ligne par ligne. Ceci permet de réaliser un balayage du capteur ligne par ligne en synchronisant l'allumage de la source de chaleur avec la lecture des cellules, et ainsi de minimiser les effets de la thermalisation sur l'image acquise. Dans ce cas, la source de chaleur peut être constituée par des pistes conductrices s'étendant le long des lignes du capteur, par exemple des pistes en métal (par exemple en molybdène ou en aluminium), des pistes en un oxyde métallique, éventuellement transparent (par exemple en oxyde d'indium étain ou indium zinc), des pistes en silicium polycristallin, ou des pistes en un polymère conducteur.

En pratique, on constate qu'avec des capteurs du type décrit en relation avec la figure 1, dans certaines conditions d'utilisation ou pour certains types de peau, il peut être difficile d'acquérir des images de bonne qualité, c'est-à-dire permettant de discriminer convenablement les crêtes des vallées de la peau. En fait, on observe que, dans certains cas, la valeur de sortie d'une cellule surmontée par une crête de la peau est très proche de la valeur de sortie d'une cellule surmontée par une vallée de la peau, ce qui rend difficile l'exploitation des images acquises par le capteur.

Selon un aspect d'un mode de réalisation, on prévoit d'amplifier la différence de niveau de tension sur le noeud de lecture SN entre une cellule surmontée par une crête de la peau et une cellule surmontée par une vallée de la peau, en connectant au noeud de lecture SN une électrode revêtue d'une couche diélectrique, cette électrode étant disposée de façon à former une capacité avec la peau de l'utilisateur.

La figure 2 est un schéma électrique illustrant un exemple d'un mode de réalisation d'un capteur d'empreintes pyroélectrique 120. Le capteur 120 de la figure 2 comprend des éléments communs avec le capteur 110 de la figure 1. Ces éléments ne seront pas décrits à nouveau. Le capteur 120 diffère du capteur 110 principalement en ce que, dans le capteur 120, des cellules élémentaires d'acquisition 121 remplacent les cellules élémentaires d'acquisition 111 du capteur 110. Les cellules élémentaires 121 du capteur de la figure 2 comprennent les mêmes éléments que les cellules élémentaires 111 du capteur de la figure 1, connectés sensiblement de la même manière, et diffèrent des cellules élémentaires 111 du capteur de la figure 1 en ce que chaque cellule 121 du capteur de la figure 2 comprend en outre une électrode EL revêtue d'une couche diélectrique, destinée à former une capacité avec la peau d'un utilisateur, cette électrode étant connectée au noeud de lecture SN de la cellule. L'électrode EL est placée au voisinage de la surface supérieure du capteur, de façon que seule une couche diélectrique (qui peut être un empilement de plusieurs couches diélectriques), par exemple une couche d'épaisseur inférieure à 50 µm et de préférence inférieure à 2 pm, sépare l'électrode EL de la surface supérieure du capteur, c'est-à-dire la surface contre laquelle est appuyé le doigt de l'utilisateur lors d'une acquisition. En particulier, l'électrode EL est de préférence disposée du côté de la couche pyroélectrique opposé au substrat (c'est-à-dire au-dessus de la face supérieure de la couche pyroélectrique).

Le capteur de la figure 2 peut être commandé de façon identique ou similaire à ce qui a été décrit en relation avec la figure 1.

Le capteur de la figure 2 présente l'avantage de permettre une meilleure discrimination entre les crêtes et les vallées de la peau qu'un capteur du type décrit en relation avec la figure 1. En effet, lors de l'acquisition d'une image de l'empreinte de la portion de peau disposée sur la surface supérieure du capteur, la capacité du noeud de lecture SN n'est pas la même dans toutes les cellules du capteur, puisqu'elle inclut la capacité formée entre l'électrode EL et la peau de l'utilisateur, qui varie selon que la cellule est surmontée par une vallée ou par une crête de la peau. Dans le cas où une cellule est surmontée par une vallée de la peau, c'est-à-dire que la peau est relativement éloignée de l'électrode EL, la capacité formée entre l'électrode EL et la peau est plus faible que lorsque la cellule est surmontée par une crête de la peau. Ainsi, la capacité du noeud de lecture SN est plus faible dans une cellule 121 surmontée par une vallée de la peau que dans une cellule surmontée par une crête de la peau. En d'autres termes, le facteur de conversion de charges en tension est plus élevé dans une cellule 121 surmontée par une vallée de la peau que dans une cellule surmontée par une crête de la peau. Or, lors d'une lecture thermique, la quantité de charges générées par l'élément pyroélectrique est plus élevée dans une cellule surmontée par une vallée de la peau que dans une cellule surmontée par une crête de la peau. La présence de l'électrode EL, formant avec la peau de l'utilisateur une capacité qui s'ajoute à la capacité du noeud SN, a ainsi pour effet d'amplifier la différence de potentiel recherchée sur le noeud SN entre les cellules surmontées par une crête et les cellules surmontées par une vallée de la peau (car la présence d'une vallée génère plus de charges sur une capacité plus faible donc une différence de potentiel plus élevée que sur une crête, avec moins de charges et une capacité plus élevée).

En pratique, la cellule peut être réalisée de façon que l'électrode de l'élément PYR connectée au noeud de lecture SN de la cellule soit disposée au voisinage de la surface supérieure du capteur et soit séparée de la surface supérieure du capteur uniquement par une couche diélectrique, par exemple d'épaisseur inférieure à 50 µm et de préférence inférieure à 2 µm. Dans ce cas, l'électrode EL peut être confondue avec l'électrode de l'élément PYR connectée au noeud de lecture SN.

La figure 3 est une vue en coupe simplifiée illustrant un exemple de réalisation d'un capteur d'empreintes pyroélectrique 110 du type décrit en relation avec la figure 1.

Les cellules 111 du capteur sont formées dans et/ou sur un substrat 301, par exemple un substrat diélectrique ou un substrat semiconducteur. Sur la figure 3, seules quatre cellules 111 du capteur ont été représentées. En outre, sur la figure 3, dans chaque cellule 111, seul l'élément pyroélectrique PYR de la cellule a été représenté. Les transistors RT, SF et RD des cellules 111, non représentés sur la figure 3, sont par exemple formés sur la surface supérieure du substrat 301 dans le cas d'une technologie de type TFT, ou dans et sur le substrat 301 dans le cas d'une technologie de type silicium monocristallin.

Dans chaque cellule 111, l'élément de conversion pyroélectrique PYR est disposé au-dessus de la surface supérieure du substrat 301, et comprend, dans l'ordre à partir de la surface supérieure du substrat 301, une électrode inférieure Eᵢ connectée au noeud de lecture SN de la cellule, une couche 303 en un matériau pyroélectrique, et une électrode supérieure E_{S} connectée au noeud d'application du potentiel de référence GND.

En pratique, dans cet exemple, la couche pyroélectrique 303 et la couche d'électrode supérieure E_{S} sont des couches continues revêtant sensiblement toute la surface du capteur, et la couche d'électrode inférieure Eᵢ est une couche discontinue (c'est-à-dire que les électrodes inférieures Eᵢ des éléments de conversion pyroélectrique PYR des différentes cellules 111 ne sont pas connectées entre elles).

Au voisinage d'un bord du capteur, la couche d'électrode supérieure E_{S} est connectée à une plaque métallique 305 destinée à être soudée à un élément de connexion extérieur 311, par exemple un fil conducteur. La plaque métallique 305 est disposée en regard d'une surface du substrat 301 non revêtue par la couche pyroélectrique 303. Cette disposition permet de faciliter la réalisation de la soudure entre la plaque 305 et l'élément 311. En effet, une telle soudure serait plus délicate à réaliser si la plaque de connexion 305 était disposée au-dessus de la couche pyroélectrique 303, en raison de la relative souplesse de la couche 303 (notamment dans le cas du PVDF qui a la consistance d'un plastique mou).

La figure 4 est une vue en coupe simplifiée illustrant un exemple de réalisation d'un capteur d'empreintes pyroélectrique 120 du type décrit en relation avec la figure 2.

De même que dans l'exemple de la figure 3, les cellules 121 du capteur sont formées dans et/ou sur un substrat 301, par exemple un substrat diélectrique ou un substrat semiconducteur. Sur la figure 4, seules quatre cellules 121 du capteur ont été représentées. En outre, comme dans l'exemple de la figure 3, les transistors RT, SF et RD des cellules n'ont pas été représentés.

Dans chaque cellule 121, l'élément de conversion pyroélectrique PYR est disposé au-dessus de la surface supérieure du substrat 301, et comprend un empilement comportant, dans l'ordre à partir de la surface supérieure du substrat 301, une électrode inférieure Eᵢ, une couche 303 en un matériau pyroélectrique, et une électrode supérieure E_{S}. Les électrodes Eᵢ et E_{S} sont formées dans des niveaux conducteurs distincts, et sont en contact respectivement avec la face inférieure et avec la face supérieure de la couche 303.

L'électrode supérieure E_{S} est connectée au noeud de lecture SN de la cellule par l'intermédiaire d'un via conducteur 401 traversant la couche 303, et d'une région conductrice 403 formée dans le même niveau conducteur que l'électrode inférieure Eᵢ mais non connectée à l'électrode Eᵢ.

L'électrode inférieure Eᵢ est connectée au noeud GND d'application du potentiel de référence du capteur. Dans l'exemple représenté, l'électrode inférieure Eᵢ est connectée, par l'intermédiaire d'un via conducteur 407 traversant la couche 303, à un réseau 409 de pistes conductrices interconnectées formées dans le même niveau conducteur que les électrodes supérieures E_{S}, mais non connecté aux électrodes E_{S}. Le réseau de pistes conductrices 409 forme par exemple un quadrillage séparant, vu de dessus, les éléments de conversion pyroélectrique PYR des différentes cellules. Le réseau de pistes conductrices 409 est lui-même relié à la plaque métallique 305 de connexion vers l'extérieur.

Un avantage de cette disposition est que le réseau de pistes conductrices 409 placé au voisinage de la surface supérieure du capteur permet de protéger le capteur contre d'éventuelles décharges électrostatiques.

Dans cet exemple, dans chaque cellule 121, l'électrode supérieure E_{S} de l'élément de conversion pyroélectrique PYR est confondue avec l'électrode EL destinée à former une capacité avec la peau de l'utilisateur. Dans chaque cellule 121, l'électrode E_{S} est revêtue d'une couche diélectrique, non représentée sur la figure 4, constituant le diélectrique de la capacité formée avec la peau.

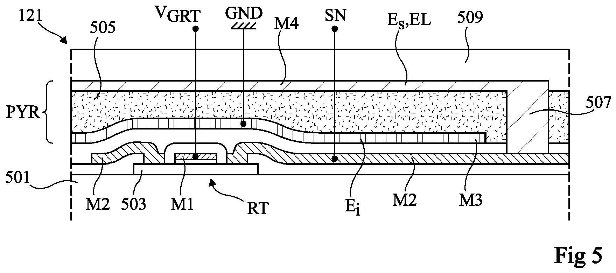

La figure 5 est une vue en coupe illustrant un autre exemple de réalisation plus détaillé d'une cellule 121 du capteur de la figure 2. Plus particulièrement, la figure 5 représente l'élément pyroélectrique PYR, le noeud SN, l'électrode EL, et le transistor de réinitialisation RT de la cellule. Sur cette figure, les transistors SF et RD de la cellule n'ont pas été représentés.

Dans l'exemple de la figure 5, la cellule 121 est formée en technologie TFT sur un substrat diélectrique 501, par exemple en verre. Une couche localisée 503 d'un matériau semiconducteur, par exemple du silicium polycristallin, est disposée au-dessus de la surface supérieure du substrat 501. Le transistor RT, ainsi que les transistors SF et RD (non représentés), sont formés dans et sur la couche semiconductrice 503. En particulier, les régions de source et de drain et les régions de formation de canal des transistors de la cellule sont formées dans la couche 503. Des résistances de chauffage, non représentées, formant la source de chaleur du capteur, peuvent aussi être formées dans la couche 503 (par exemple une résistance par cellule). A titre de variante, les résistances de chauffage peuvent être formées dans une couche conductrice de la structure, par exemple dans le niveau de métallisation M4 décrit ci-après. La grille du transistor RT est formée dans un premier niveau de métallisation M1 surmontant la couche 503 et séparé de la couche 503 par une couche isolante formant l'oxyde de grille du transistor RT. Les électrodes de source et de drain du transistor RT sont formées dans un deuxième niveau de métallisation M2 surmontant le niveau M1. L'électrode inférieure Eᵢ de l'élément pyroélectrique PYR, connectée au noeud d'application du potentiel de référence GND, est formée dans un troisième niveau de métallisation M3 surmontant le niveau M2. Cette électrode est revêtue d'une couche 505 d'un matériau pyroélectrique. La couche 505 est revêtue par l'électrode supérieure E_{S} de l'élément pyroélectrique PYR, formée dans un quatrième niveau de métallisation M4. Dans cet exemple, la deuxième électrode (électrode supérieure) de l'élément pyroélectrique PYR est confondue avec l'électrode EL, et est connectée à une électrode de source ou drain du transistor RT (niveau M2) par l'intermédiaire d'un via 507. L'électrode de source ou drain du transistor RT connectée à l'électrode EL définit le noeud de lecture SN de la cellule, et est connectée à la grille du transistor RD (non représenté). Une couche isolante 509 revêt le niveau de métallisation M4. La couche 509 forme le diélectrique de la capacité entre l'électrode EL et la peau de l'utilisateur. La surface supérieure de la couche 509 est destinée à être mise en contact avec la peau dont on souhaite acquérir une empreinte. A titre d'exemple, la couche 509 a une épaisseur inférieure ou égale à 50 pm, et de préférence inférieure ou égale à 2 µm.

Des modes de réalisation particuliers ont été décrits. Diverses variantes et modifications apparaîtront à l'homme de l'art. En particulier, les modes de réalisation décrits ne se limitent pas à l'exemple particulier de schéma électrique de cellule élémentaire représenté sur la figure 2. Les modes de réalisation décrits peuvent notamment être adaptés à des cellules élémentaires comportant un nombre de transistors de contrôle différent de 3 ou dans lesquelles l'agencement des transistors de contrôle est différent.

De plus, les modes de réalisation décrits ne se limitent pas aux exemples particuliers de structures de cellules élémentaires décrits en relation avec les figures 4 et 5. L'homme du métier saura obtenir l'effet recherché en prévoyant d'autres agencements de l'élément de conversion pyroélectrique PYR et de l'électrode EL destinée à former une capacité avec la peau de l'utilisateur. En particulier, l'homme du métier saura prévoir des agencements dans lesquels l'électrode EL n'est pas confondue avec une électrode de l'élément de conversion pyroélectrique PYR.

De plus, l'homme du métier saura adapter les modes de réalisation décrits à des éléments de conversion autres que des éléments de conversion pyroélectriques. A titre d'exemple, dans les modes de réalisation décrits, l'élément pyroélectrique PYR peut être remplacé par un élément de conversion photoélectrique, par exemple une photodiode (par exemple de type PIN). Dans ce cas, l'électrode EL destinée à former une capacité avec la peau de l'utilisateur peut être connectée à l'une des électrodes de l'élément de conversion photoélectrique. De préférence, l'électrode EL est alors connectée de façon à amplifier la différence de niveau de tension sur le noeud de lecture SN entre une cellule surmontée par une crête de la peau et une cellule surmontée par une vallée de la peau. En particulier, l'électrode EL peut être connectée de façon que la présence d'une vallée produise plus de charges électriques que la présence d'une crête, de manière à bénéficier de la réduction de tension provoquée simultanément par l'apport de capacité électrique supplémentaire et la réduction de charges générées par la proximité de la peau dans le cas d'une crête.

## Revendications

1. Capteur d'empreintes (120) comportant une pluralité de cellules élémentaires d'acquisition (121) disposées dans et/ou sur un substrat (301 ; 501), chaque cellule comportant :
un élément de conversion pyroélectrique (PYR) comportant des première (Eᵢ) et deuxième (E_{S}) électrodes séparées par une couche (303 ; 505) d'un matériau pyroélectrique, la première électrode (Eᵢ) étant connectée à un noeud (GND) d'application d'un potentiel de référence du capteur, et la deuxième électrode (E_{S}) étant connectée à un noeud de lecture (SN) de la cellule ; et
une électrode (EL) destinée à former une capacité avec la peau d'un utilisateur, connectée au noeud de lecture (SN) et revêtue d'une couche diélectrique (509).

2. Capteur (120) selon la revendication 1, dans lequel, dans chaque cellule (121), l'électrode (EL) destinée à former une capacité avec la peau d'un utilisateur est disposée de façon que seule la couche diélectrique (509) sépare cette électrode (EL) d'une surface du capteur destinée à être mise en contact avec la peau d'un utilisateur.

3. Capteur (120) selon la revendication 1 ou 2, dans lequel, dans chaque cellule (121), l'électrode (EL) destinée à former une capacité avec la peau d'un utilisateur est disposée du côté de la couche pyroélectrique (303) opposé au substrat (301 ; 501) .

4. Capteur (120) selon l'une quelconque des revendications 1 à 3, dans lequel, dans chaque cellule, l'électrode (EL) destinée à former une capacité avec la peau d'un utilisateur est connectée au noeud de lecture (SN) par l'intermédiaire d'un via conducteur (401) traversant la couche pyroélectrique (303).

5. Capteur (120) selon l'une quelconque des revendications 1 à 4, dans lequel la couche diélectrique (509) a une épaisseur inférieure à 50 µm.

6. Capteur (120) selon l'une quelconque des revendications 1 à 5, dans lequel la deuxième électrode (E_{S}) et l'électrode (EL) destinée à former une capacité avec la peau d'un utilisateur forment une seule et même électrode.

7. Capteur (120) selon l'une quelconque des revendications 1 à 5, dans lequel la deuxième électrode (E_{S}) et l'électrode (EL) destinée à former une capacité avec la peau d'un utilisateur sont des électrodes distinctes.

8. Capteur (120) selon l'une quelconque des revendications 1 à 7, dans lequel, dans chaque cellule, la première électrode (Eᵢ) est connectée à un réseau de pistes conductrices (409) disposé du côté de la couche pyroélectrique (303) opposé au substrat (301 ; 501) par l'intermédiaire d'un via conducteur (407) traversant la couche pyroélectrique (303).

9. Capteur (120) selon l'une quelconque des revendications 1 à 8, dans lequel chaque cellule (121) comprend en outre un transistor de réinitialisation (RT) reliant le noeud de lecture (SN) à un noeud d'application d'un potentiel de réinitialisation (V_{RT}).

10. Capteur (120) selon l'une quelconque des revendications 1 à 9, dans lequel, dans chaque cellule (121), le noeud de lecture (SN) est relié à une piste de sortie (CL) de la cellule par l'intermédiaire d'un transistor (SF) monté en source suiveuse et d'un transistor de lecture (RD).

11. Capteur (120) selon l'une quelconque des revendications 1 à 10, comprenant en outre une source de chaleur commandable.

## Patentansprüche

1. Abdrucksensor (120), der eine Vielzahl von Elementarerfassungszellen (121) aufweist, die innerhalb und/oder auf einem Substrat (301; 501) angeordnet sind, wobei jede Zelle Folgendes aufweist:
ein pyroelektrisches Umwandlungselement (PYR), das erste (Eᵢ) und zweite (Eₛ) Elektroden aufweist, die durch eine Schicht (303; 505) aus einem pyroelektrischen Material getrennt sind, wobei die erste Elektrode (Eᵢ) mit einem Knoten (GND) zum Anlegen eines Bezugspotentials des Sensors verbunden ist, und die zweite Elektrode (Eₛ) mit einem Sensor- bzw. Abfühlknoten (SN) der Zelle verbunden ist; und
eine Elektrode (EL), die dazu bestimmt ist, einen Kondensator mit der Haut eines Benutzers zu bilden, die mit dem Sensorknoten (SN) verbunden und mit einer dielektrischen Schicht (509) beschichtet ist.

2. Sensor (120) nach Anspruch 1, wobei in jeder Zelle (121) die Elektrode (EL), die dazu bestimmt ist, einen Kondensator mit der Haut eines Benutzers zu bilden, so angeordnet ist, dass nur die dielektrische Schicht (509) diese Elektrode (EL) von einer Oberfläche des Sensors trennt, die dazu bestimmt ist, in Kontakt mit der Haut eines Benutzers gebracht zu werden.

3. Sensor (120) nach Anspruch 1 oder 2, wobei in jeder Zelle (121) die Elektrode (EL), die dazu bestimmt ist, einen Kondensator mit der Haut eines Benutzers zu bilden, auf der dem Substrat (301; 501) entgegengesetzten Seite der pyroelektrischen Schicht (303) angeordnet ist.

4. Sensor (120) nach einem der Ansprüche 1 bis 3, wobei in jeder Zelle die Elektrode (EL), die dazu bestimmt ist, einen Kondensator mit der Haut eines Benutzers zu bilden, mit dem Sensorknoten (SN) über eine leitende Durchkontaktierung (401) verbunden ist, die die pyroelektrische Schicht (303) durchquert.

5. Sensor (120) nach einem der Ansprüche 1 bis 4, wobei die dielektrische Schicht (509) eine Dicke von weniger als 50 µm aufweist.

6. Sensor (120) nach einem der Ansprüche 1 bis 5, wobei die zweite Elektrode (Eₛ) und die Elektrode (EL), die dazu bestimmt sind, einen Kondensator mit der Haut eines Benutzers zu bilden, ein und dieselbe Elektrode bilden.

7. Sensor (120) nach einem der Ansprüche 1 bis 5, wobei die zweite Elektrode (Eₛ) und die Elektrode (EL), die dazu bestimmt sind, einen Kondensator mit der Haut eines Benutzers zu bilden, verschiedene Elektroden sind.

8. Sensor (120) nach einem der Ansprüche 1 bis 7, wobei in jeder Zelle die erste Elektrode (Eᵢ) mit einem Netzwerk von Leiterbahnen (409) verbunden ist, die auf der dem Substrat (301; 501) entgegengesetzten Seite der pyroelektrischen Schicht (303) über eine leitende Durchkontaktierung (407), die die pyroelektrische Schicht (303) durchqueren, angeordnet sind.

9. Zelle (120) nach einem der Ansprüche 1 bis 8, wobei jede Zelle (121) ferner einen Reset-Transistor (RT) aufweist, der den Sensorknoten (SN) mit einem Knoten zum Anlegen eines Reset-Potentials (V_{RT}) koppelt.

10. Sensor (120) nach einem der Ansprüche 1 bis 9, wobei in jeder Zelle (121) der Sensorknoten (SN) mit einer Ausgangsleitung (CL) der Zelle über einen Transistor (SF) gekoppelt ist, der als Folgequelle und Auslesetransistor (RD) aufgebaut ist.

11. Sensor (120) nach einem der Ansprüche 1 bis 10, der ferner eine steuerbare Wärmequelle aufweist.

## Claims

1. A print sensor (120) comprising a plurality of elementary acquisition cells (121) arranged inside and/or on top of a substrate (301; 501), each cell comprising:
a pyroelectric conversion element (PYR) comprising first (Eᵢ) and second (E_{S}) electrodes separated by a layer (303; 505) of a pyroelectric material, the first electrode (Eᵢ) being connected to a node (GND) of application of a reference potential of the sensor, and the second electrode (E_{S}) being connected to a sense node (SN) of the cell; and
an electrode (EL) intended to form a capacitor with a user's skin, connected to the sense node (SN) and coated with a dielectric layer (509).

2. The sensor (120) of claim 1, wherein, in each cell (121), the electrode (EL) intended to form a capacitor with a user's skin is arranged so that only the dielectric layer (509) separates this electrode (EL) from a surface of the sensor intended to be placed in contact with a user's skin.

3. The sensor (120) of claim 1 or 2, wherein, in each cell (121), the electrode (EL) intended to form a capacitor with a user's skin is arranged on the side of the pyroelectric layer (303) opposite to the substrate (301; 501).

4. The sensor (120) of any of claims 1 to 3, wherein, in each cell, the electrode (EL) intended to form a capacitor with a user's skin is connected to the sense node (SN) via a conductive via (401) crossing the pyroelectric layer (303).

5. The sensor (120) of any of claims 1 to 4, wherein the dielectric layer (509) has a thickness smaller than 50 µm.

6. The sensor (120) of any of claims 1 to 5, wherein the second electrode (E_{S}) and the electrode (EL) intended to form a capacitor with a user's skin form one and the same electrode.

7. The sensor (120) of any of claims 1 to 5, wherein the second electrode (E_{S}) and the electrode (EL) intended to form a capacitor with a user's skin are different electrodes.

8. The sensor (120) of any of claims 1 to 7, wherein, in each cell, the first electrode (Eᵢ) is connected to a network of conductive tracks (409) arranged on the side of the pyroelectric layer (303) opposite to the substrate (301; 501) via a conductive via (407) crossing the pyroelectric layer (303).

9. The cell (120) of any of claims 1 to 8, wherein each cell (121) further comprises a reset transistor (RT) coupling the sense node (SN) to a node of application of a reset potential (V_{RT}).

10. The sensor (120) of any of claims 1 to 9, wherein, in each cell (121), the sense node (SN) is coupled to an output track (CL) of the cell via a transistor (SF) assembled as a follower source and a readout transistor (RD).

11. The sensor (120) of any of claims 1 to 10, further comprising a controllable heat source.
